# EUROPEAN PATENT APPLICATION

(11) **EP 4 664 633 A1**
(43) Date of publication of application: **17.12.2025**
(21) Application number: 24868534.9
(22) Date of filing: 03.09.2024
(51) Int. Cl.: H01M 50/231, H01M 50/22, H01M 50/204

(54) **MODULE FRAME FOR SECONDARY BATTERY AND SECONDARY BATTERY INCLUDING SAME**

(30) Priority: 18.09.2023 KR 20230123908; 27.11.2023 KR 20230166990
(71) Applicant: LG Energy Solution, Ltd., Seoul 07335 (KR)
(72) Inventor: KIM, Doo Seung, Daejeon 34122 (KR); KIM, Hyun Jung, Daejeon 34122 (KR); UM, Tae Ki, Daejeon 34122 (KR); JANG, Cheol Han, Daejeon 34122 (KR); LEE, Jung Hoon, Daejeon 34122 (KR); LEE, Young Bin, Daejeon 34122 (KR)
(74) Representative: Plasseraud IP
(86) International application number: PCT/KR2024/013261
(87) International publication number: WO 2025/063555

(57) **Abstract**

A module frame for a secondary battery according to various embodiments may be configured to accommodate a battery cell stack including multiple battery cells stacked along one direction, wherein the module frame is formed by a composite material-based plate including fiber reinforced plastic; and the plate includes at least multiple layers including a first layer and a second layer and has a layered cross-section symmetrical in the thickness direction of the plate. In addition, other embodiments are possible.

## Description

### Technical Field

The present disclosure relates to a module frame for secondary battery and secondary battery including the same.

### Background Art

In modern society, the use of various portable devices such as cell phones, laptops, and digital cameras has become commonplace. Thus, development of battery-related technologies, which are essential components for various mobile devices, is actively underway. Further, recently, electric vehicles that use electricity as a power source are emerging as an alternative to internal combustion engine vehicles that have caused various problems such as environmental pollution. In line with this trend, the need for development of secondary batteries to be installed in electric vehicles is increasing.

Currently commercialized secondary batteries include nickel cadmium batteries, nickel hydrogen batteries, nickel zinc batteries, and lithium secondary batteries. Among these, lithium secondary batteries are attracting attention, since the lithium secondary batteries have the advantage of being free to charge and discharge, having a very low self-discharge rate and high energy density, and there is almost no memory effect, compared to other nickel-based secondary batteries.

In these lithium secondary batteries, lithium oxides and carbon materials may be mainly used as positive electrode active materials and negative electrode active materials, respectively. The lithium secondary battery may include positive and negative plates, each coated with a positive active material and a negative active material, respectively, the electrode assembly consisting of a separator placed between the positive plate and the negative plate, and a battery case that seals and stores the electrode assembly together with the electrolyte.

In general, depending on the shape of the outer packaging material, the lithium secondary batteries may be classified into a can-type secondary battery in which the electrode assembly is housed in a metal may and a pouch-type secondary battery in which the electrode assembly is housed in a pouch made of aluminum laminate sheet.

For secondary batteries used in small devices, it is sufficient to consist of only two to three battery cells. However, secondary batteries used in medium and large devices such as automobiles may need to be implemented in the form of a battery module that electrically connects multiple battery cells in order to improve capacity and output. The battery modules may be mounted inside a module frame for a secondary battery in the form of a battery cell laminated body in which a number of battery cells are connected in series or parallel with each other. Further, one or more battery modules may be mounted together with various control and protection systems, such as a battery management system (BMS) and a cooling system, to form a battery pack.

In this way, the module frame of the secondary battery on which the battery cell laminated body is mounted may serve as a case that provides mechanical support for battery cells that lack mechanical rigidity and protects the battery cells from external impacts and so on.

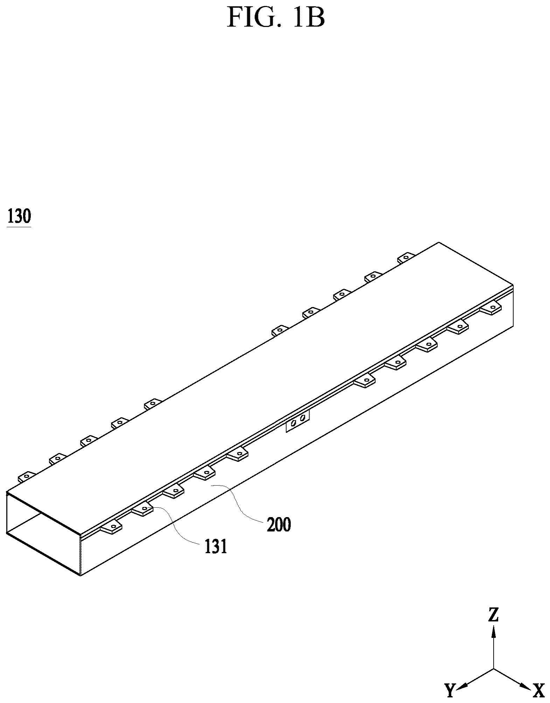

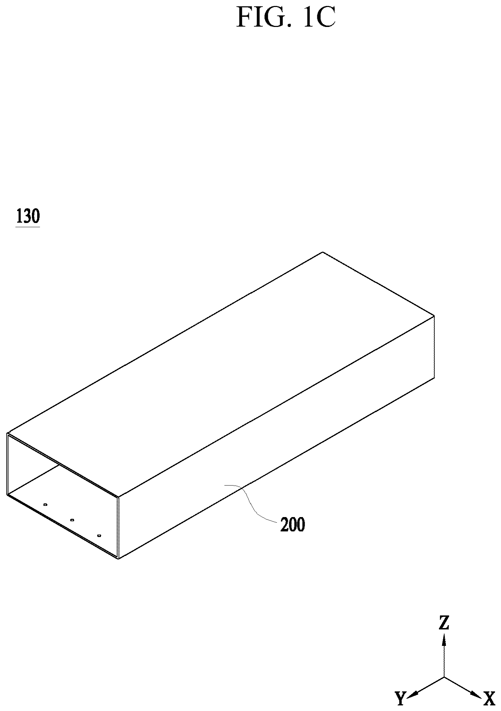

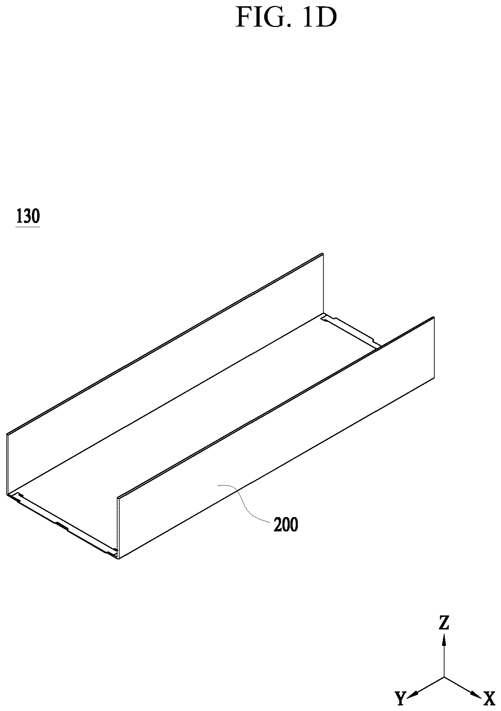

The module frame of the secondary battery may be manufactured in various shapes depending on the module shape and structure of the secondary battery. In an example embodiment, the module frame of the secondary battery may be manufactured in a square tube shape called a mono frame (see FIG. 1B and FIG.1C) or as a U-shaped frame (see FIG. 1D).

Meanwhile, the module frame of the secondary battery is usually manufactured mainly from metal materials (for example, aluminum alloy) to protect the battery cell laminated body from external impact or to facilitate storage.

### Detailed Description of the Invention

### Technical Goals

However, when manufacturing a module frame for a secondary battery using metal materials, due to its material properties, there are limits to reducing the weight of the secondary battery, and the manufacturing method of the module frame is also limited. Even in the product development process, there are problems that make it difficult to differentiate and diversify products due to the limited use of uniform materials. Further, in line with the trend of increasing the capacity of secondary batteries, there is an increasing need to develop a module frame that has the stress to withstand the swelling phenomenon of battery cells.

According to various example embodiments of the present disclosure, provided is a module frame that is lighter than existing models and has characteristics optimized for secondary batteries by utilizing composite materials including fiber reinforced plastic (FRP) materials and metal sheets, and a secondary battery including the same.

### Technical solutions

According to various example embodiments of the present disclosure, provided is a module housing for secondary battery, for accommodating a battery cell laminated body including a plurality of battery cells laminated along a first direction, wherein the module housing for the secondary battery is formed by a plate based on a composite material including FRP, the plate includes a plurality of first layers that are formed of a FRP material having electrical insulating properties, and at least one second layer that is formed of a material different from the plurality of first layers, and interposed between the plurality of first layers, and including a layered cross-sectional structure symmetrical in a thickness direction of the plate.

According to an example embodiment, a plurality of second layers may be prepared, and the plate may be formed from a material different from the plurality of first layers and the plurality of second layers, and includes a third layer that is interposed between the second layers.

According to an example embodiment, each of the plurality of first layers, each of the plurality of second layers and the third layer may include a plurality of fine layers, of which number is identical for each of the plurality of first layers, each of the plurality of second layers and the third layer.

According to an example embodiment, each of the plurality of first layers, each of the plurality of second layers and the third layer may include a plurality of fine layers, each including a layered cross-sectional structure symmetrical in the thickness direction.

According to an example embodiment, the at least one second layer may include at least one first fine fiber layer constituted of threads that are arranged in order for a direction corresponding to a principal stress direction of the plate to be a longitudinal direction of the threads, and at least one second fine fiber layer constituted of threads that are arranged in order for a direction corresponding to a direction other than the principal stress direction to be the longitudinal direction of the threads, wherein a number of the at least one first fine fiber layer of the at least one second layer is greater than a number of the at least one second fine fiber layer.

According to an example embodiment, the at least one second fine fiber layer of the at least one second layer may be constituted of threads that are arranged in order for a direction corresponding to a secondary stress direction of the plate to be the longitudinal direction of the threads.

According to an example embodiment, the principal stress direction and the secondary stress direction may be perpendicular to each other.

According to an example embodiment, the at least one first fine fiber layer of the at least one second layer may include carbon fiber, or glass fiber constituted of a greater density than threads constituting the at least one second fiber layer of the at least one second layer.

According to an example embodiment, the third layer may include at least one between a fine layer constituted of basalt fibers and a fine layer constituted of a metal sheet made of stainless steel.

According to an example embodiment, each of the plurality of second layers and the third layer may have substantially an identical thickness.

According to an example embodiment, the third layer may include at least one first fine layer formed by threads that are arranged in order for a direction corresponding to the principal stress direction of the plate to be the longitudinal direction of the threads, and at least one second fine layer formed by threads that are arranged in order for the direction corresponding to the secondary stress direction of the plate to be the longitudinal direction of the threads, wherein a number of the at least one first fine layer of the third layer may be less than a number of the at least one second fine layer of the third layer.

According to an example embodiment, the module housing for the secondary battery may further include a mounting flange that is located on a closed end part of a side surface, and the mounting flange may be formed with a material identical to the material of the plate.

According to an example embodiment, the module housing for the secondary battery may be manufactured by a resin transfer molding (RTM) method, a heterogeneous injection molding method, a pressing method, or a drawing method.

According to an example embodiment, each of the plurality of first layers may include a thickness of less than 2 mm. Alternatively, each of the plurality of first layers may have a thickness corresponding to approximately half the thickness of the third layer.

According to various example embodiments of the present disclosure, provided is a module housing for secondary battery, for accommodating a battery cell laminated body including a plurality of battery cells laminated along a first direction, wherein the module housing for the secondary battery is formed by a plate based on a composite material including fiber reinforced plastic, the plate includes a third layer placed at a center based on a cross-section of the plate in a thickness direction, a plurality of first layers arranged on an outer surface based on the cross-section of the plate in the thickness direction, and a plurality of second layers that are placed on both sides with the third layer in between, and interposed between the plurality of first layers, wherein the plurality of first layers are formed of a FRP material with electrical insulating properties, the plurality of second layers have greater mechanical strength than the plurality of first layers, and the third layer includes at least one of basalt fiber and a metal sheet.

### Effects of the Invention

According to the example embodiments, a module frame for a secondary battery and a secondary battery including the same may be configured to have weight properties optimized for various types of secondary batteries, mechanical strength (for example, tensile strength) properties, rigidity properties, insulation properties, fire resistance properties and/or manufacturing cost properties, using the FRP material.

According to the example embodiments, unnecessary manufacturing processes may be omitted by making the plate based on composite material including the FRP material used to form the module frame to have a layered cross-sectional structure symmetrical in the thickness direction, and durability issues at specific points in the module frame may be prevented.

With the module frame with improved fire resistance, even when a thermal event occurs in the secondary battery, structural collapse of the secondary battery module itself may be prevented, or heat diffusion may be prevented by blocking the inflow of oxygen.

Further, by designing the module frame considering the main stress directions that the secondary battery module must withstand, such as the swelling problem of the battery cell, a secondary battery with maximized structural stability may be provided. Furthermore, provided may be a module frame configured to withstand greater internal pressure than an existing module frames.

However, the present disclosure is not limited to the aspects described above, and it is apparent that aspects not described may be clearly understood by those skilled in the art from the present specification and drawings.

### Brief Description of Drawings

FIG. 1A is a schematic exploded perspective view of a secondary battery module according to an example embodiment of the present disclosure.
FIG. 1B to FIG. 1D are perspective views of a module frame for a secondary battery according to various example embodiments of the present disclosure.
FIG. 2 is a cross-sectional view schematically illustrating a layered cross-sectional structure of a plate constituting a module frame according to various example embodiments of the present disclosure.
FIG. 3 is a schematic perspective view illustrating the principal stress direction and the secondary stress direction of a secondary battery module in a module frame according to various example embodiments of the present disclosure.
FIG. 4A is a drawing exemplarily illustrating the radial thread arrangement direction of each of a plurality of fiber layers constituting the first layer.
FIG. 4B is a drawing exemplarily showing the arrangement direction of each thread of a plurality of fiber layers constituting the second layer.
FIG. 5A and FIG. 5B are schematic cross-sectional and perspective views of a module frame for explaining the principal stress direction and secondary stress direction of the module frame according to the battery cell swelling phenomenon in various example embodiments of the present disclosure.
FIG. 6A and FIG. 6B are schematic cross-sectional and perspective views of a module frame for explaining the principal stress direction and the secondary stress direction of the module frame according to the increase in internal pressure of the secondary battery module in various example embodiments of the present disclosure.

### Mode for Carrying Out the Invention

Prior to the detailed description of the present disclosure, terms or words used in the specification and claims should not be construed as limited to their common or dictionary meanings. Further, the terms or words should be interpreted with meaning and concept consistent with the technical idea of the present disclosure based on the principle that the inventor may appropriately define the concept of terms in order to explain his or her invention in the best way. The example embodiments described in this specification and the configurations illustrated in the drawings are only the most preferred embodiments of the present disclosure, and do not necessarily represent the entire technical idea of the present disclosure. Accordingly, at the time of filing the present disclosure, there may be various equivalents and modifications that can replace them.

The same reference numeral or sign illustrated in each drawing attached to the specification may represent parts or components that perform substantially the same function. For convenience of description and understanding, different embodiments may be described using the same reference numerals or symbols. In other words, even if a component or an element having the same reference numeral is illustrated in multiple drawings, the multiple drawings may not all represent one example embodiment.

In the following description, singular expressions include plural expressions unless the context clearly dictates otherwise. It will be understood that, when an element (for example, a first element) is "(operatively or communicatively) coupled with/to" or "connected to" another element (for example, a second element), the element may be directly coupled with/to another element, and there may be an intervening element (for example, a third element) between the element and another element. The terms "have," "may have," "include," and "may include" as used herein indicate the presence of corresponding features (for example, elements such as numerical values, functions, operations, or parts), and do not preclude the presence of additional features.

Further, in the following description, expressions such as an upper side, top, a lower side, bottom, a side, front and a back side are expressed based on the direction illustrated in the drawing. If the direction of the object changes, it may be expressed differently.

Further, in the specification and claims, terms including ordinal numbers such as "first," "second," etc. may be used to distinguish between components or elements. These ordinal numbers are used to distinguish identical or similar components from each other, and the meaning of the terms should not be interpreted limitedly due to the use of such ordinal numbers. For example, components or elements combined with these ordinal numbers should not be interpreted as having a limited order of use or arrangement based on the number. If necessary, each ordinal number may be used interchangeably.

Hereinafter, example embodiments of the present disclosure will be described in detail with reference to the attached drawings. However, the spirit of the present disclosure may not be limited to the example embodiments. For example, a person skilled in the art who understands the spirit of the present disclosure may suggest other example embodiments that are included within the scope of the spirit of the present disclosure through addition, change, or deletion of components or elements: however, such example embodiments are intended to be included within the scope of the present disclosure. The shapes and sizes of elements in the drawings may be exaggerated for clearer explanation.

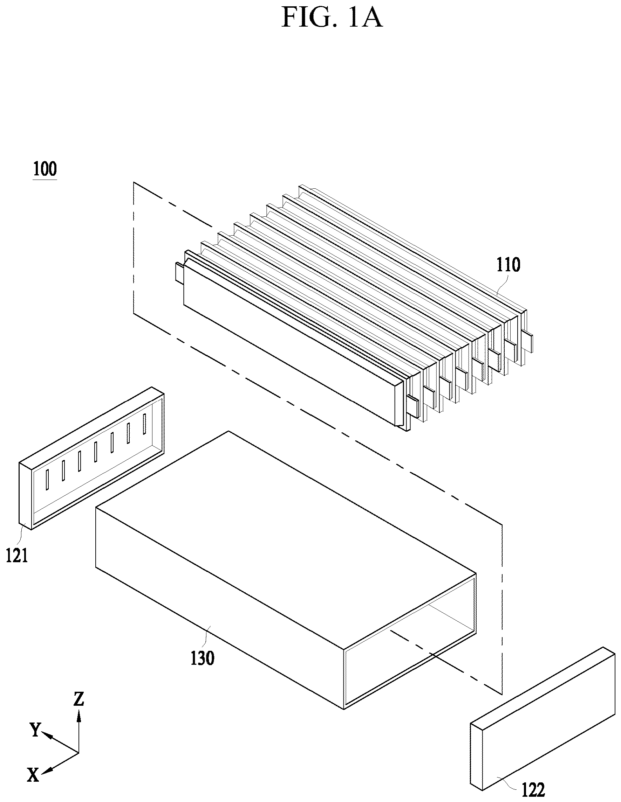

FIG. 1A is a schematic exploded perspective view of a secondary battery module 100 according to an example embodiment of the present disclosure. FIG. 1B to FIG. 1D are perspective views of a module frame 130 for a secondary battery according to various example embodiments of the present disclosure.

Referring to FIG. 1A to FIG. 1D, the secondary battery module 100 according to various example embodiments may include the battery cell laminated body including a plurality of battery cells 110 and a housing assembly accommodating the battery cell laminated body. The housing assembly is intended to physically protect the battery cell laminated body, and configured to have desired mechanical strength and rigidity characteristics.

The housing assembly may include the module frame 130 (see FIG. 1B to FIG. 1D) and a cover assembly (a first cover assembly 121 and a second cover assembly 122).

For example, the housing assembly may include the module frame 130, the first cover assembly 121 covering a first side surface (for example, a front side, an end part facing the +y direction) of the open end part of the module frame 130, and the second cover assembly 122 covering the second side surface (for example, a back side, an end part facing the -y direction) which is another open end part of the above module frame.

The module frame 130 may have a mono frame structure as illustrated in FIG. 1B and FIG. 1C or a U-shaped structure as illustrated in FIG. 1D. Meanwhile, when the module frame 130 has a structure including a U-shaped frame as illustrated in FIG. 1D, a third cover assembly (not illustrated) covering the third side surface (for example, the end part facing the top surface and the +z direction), which is another open end part of the above U-shaped frame, may be further included as a housing assembly.

At least a portion of such a housing assembly may be formed of substantially the same material as the module frame 130 (for example, the FRP material), or may be formed of a simple metal material (for example, an aluminum alloy).

In an example embodiment, the battery cell 110 may include a pouch-type battery cell.

The pouch-type battery cell may be formed by placing an electrode case in a pouch case made of a laminate sheet including a resin layer and a metal layer and then heat-fusing the sealing portion of the pouch case. Here, the battery cell 110 may have a substantially rectangular sheet-like structure. However, the battery cell 110 included in the secondary battery module is not limited to the pouch-type battery cell. For example, the battery cell 110 may be composed of a square battery cell in which an electrode assembly is accommodated inside a square case having a predetermined rigidity, or may be configured as a cylindrical battery cell with the electrode assembly housed inside a cylindrical case.

Prepared may be the plurality of battery cells 110 to form a battery cell laminated body.

For example, the plurality of battery cells 110 constituting the battery cell laminated body may be electrically interconnected and may be arranged in a substantially parallel stack along one direction (for example, the +x direction). For example, the one direction may be perpendicular to the direction in which gravity acts.

The module frame 130 according to the various example embodiments may include a flange 131 on at least one side (for example, the closed surface of both side surfaces) as illustrated in FIG. 1B, and may not include the flange 131 as illustrated in FIG. 1C.

Meanwhile, in an example embodiment, when the module frame 130 includes the flange 131, the flange 131 may be formed based on substantially the same material (for example, a composite material including at least one of FRP and metal sheets) as a plate 200 constituting each surface (for example, a closed surface of upper surface, a lower surface, and both side surfaces) of the module frame 130.

According to various example embodiments of the present disclosure, the module frame 130 may be formed of the plate 200 based on a composite material including the FRP material, a metal sheet, and the like.

The FRP may include reinforcement that determines stiffness through fiber materials, and matrix resin that transmits the stress of reinforcement and maintains the shape of reinforcement or the composite material. The matrix resin may be viscous, and the matrix resin may be embedded within at least one fiber layer of the reinforcement, or between fiber layers, and the matrix resin may then be cured to form at least one fiber layer.

For example, the fiber material may include at least one of glass fiber, carbon fiber, basalt fiber, polymer fiber (for example, Kevlar, nylon, polyester, and aramid), ceramic fiber, and boron fiber.

The matrix resin may include at least one thermosetting resin material such as urethane and epoxy.

Meanwhile, in an example embodiment, the composite material may further include sheet materials (for example, at least one of a polyethylene terephthalate (PET) sheet, a polyurethane (PU) sheet, or a metal (for example, stainless steel) sheet) interposed between the fiber materials.

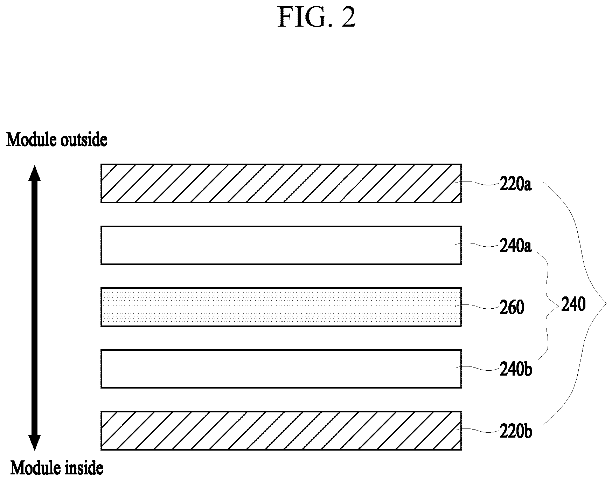

FIG. 2 is a cross-sectional view schematically illustrating a layered cross-sectional structure of plates constituting each side of the module frame 130 according to various example embodiments of the present disclosure.

Referring to FIG. 2, the plate 200 forming the module frame 130 may include multiple layers having different properties (for example, a first layer 220, a second layer 240, and a third layer 260). In particular, the plate 200 according to various example embodiments of the present disclosure may have a layered structure symmetrical in the thickness direction. In other words, a single-layer structure when facing from the inside to the outside of the module (for example, the secondary battery module 100 of FIG. 1) and a single-layer structure of the plate 200 when facing from the outside to the inside of the module may be identical to each other in terms of at least one of the material, thickness and a side surface of thread arrangement. The plate 200, which has a symmetrical layered cross-section structure like this, does not require distinction between the two sides, and thus it may have advantages in the manufacturing process. Further, with the plate 200, local stiffness differences on each side of the manufactured module may be prevented.

Specifically, the first layer 220 corresponding to the outermost layer (for example, the layer placed at the outermost side and the layer placed at the innermost side of the secondary battery module) of the plate 200 may be configured to have electrical insulation properties.

For example, the first layer 220 may include the FRP having the properties of a non-conductor (insulating performance), such as glass fiber, basalt fiber and aramid fiber.

Specifically, in an example embodiment, the first layer 220 may include multiple fine fiber layers. Here, the fine fiber layers may be arranged so that the arrangement directions of the threads constituting each fine fiber layer are combined with each other to form an overall radial structure.

The first layer 220 is placed on the outer side of the plate 200, so it may have the greatest need for protection from external physical forces. Further, in addition to the external physical forces, it may be necessary to withstand internal pressure generated within the frame of the secondary battery module. Therefore, when each fine fiber layer is configured in order for each first layer 220 (for example, a layer 1-1 220a and a layer 1-2 220b) to have an overall radial structure, regardless of the direction of the external force acting on the plate 200, the possibility of damage to the plate 200 may be minimized in each direction.

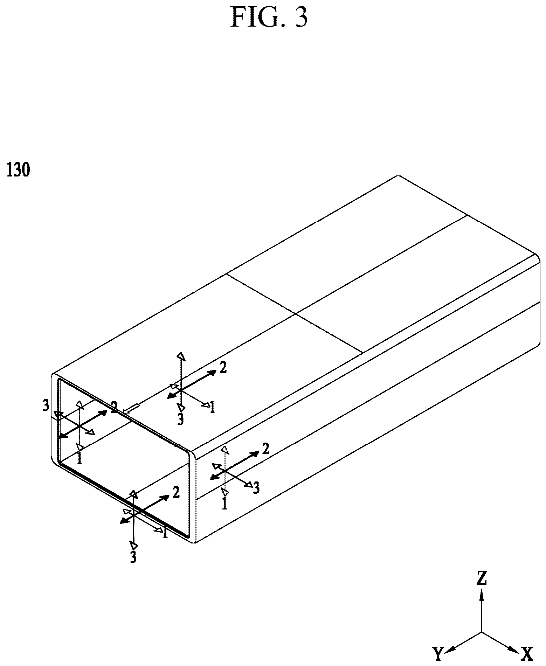

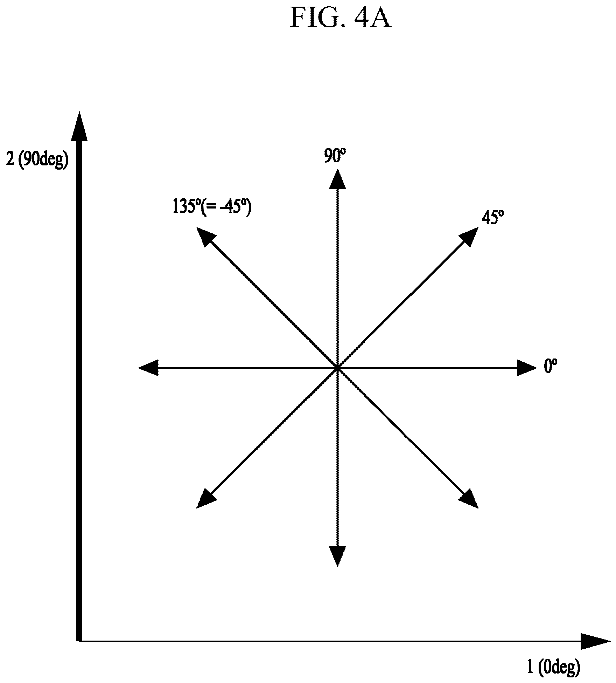

Meanwhile, in an example embodiment, the first layer 220 may be configured to have, when the principal stress direction (in other words, under the normal usage environment of the secondary battery module, the first direction corresponds to the direction with the highest proportion of stress acting on the module frame 130) (for example, the direction illustrated by the arrow "1" in FIG. 3 and FIG. 4A) of the secondary battery module (for example, the secondary battery module 100 in FIG. 1) and the secondary stress direction (in other words, under the normal usage environment of the secondary battery module, the second direction corresponding to the second highest stress applied to the module frame 130) (for example, the direction perpendicular to the first direction in a plane parallel to each plate 200 of the module frame 130, for example, the direction illustrated by the arrow "2" in FIG. 3 and FIG. 4A)) of the secondary battery module are set to two axes of 0 degree and 90 degree, respectively, arrangement in which one of the directions, "0 degrees" (-180 degrees) (i.e., the principal stress direction of the module), "90 degrees" (-90 degrees) (i.e., the secondary stress direction of the module), "45 degrees" (-135 degrees) and "135 degrees" (-45 degrees), is the length direction of the threads of each fine fiber layer, and the individual fine fiber layers (for example, the layer 1-1 220a or the layer 1-2 220b)are laminated to form one fiber layer having a radial structure. Meanwhile, it is also apparent that the principal stress direction of the secondary battery module may be in a direction other than the direction of arrow "1" illustrated in FIG. 3 and FIG. 4A (for example, the direction indicated by arrow "2" in FIG. 3 and FIG. 4A) based on the direction in which the battery cells 110 are arranged inside the module frame 130.

Meanwhile, according to various example embodiments of the present disclosure, the module frame 130 may be configured to have the same symmetrical structure when viewed from either the inner or outer direction of the secondary battery module based on the layered cross-section of the plate 200.

For example, based on either the inside to outside direction or the outside to inside direction of a specific plate 200, when the layer 1-1 220a, the outermost layer of the plate 200, is formed by being laminated in the order of a first fine fiber layer that is arranged in order for the "0 degree" (-180 degree) direction (i.e. the principal stress direction of the module) to be the longitudinal direction of the threads, a second fine fiber layer that is arranged in order for the direction of "45 degrees" (-135 degrees) to be the length direction of the threads, and a third fine fiber layer that is arranged in order for the direction of "135 degrees" (-45 degrees) to be the longitudinal direction of the threads, the layer 1-2 220b corresponding thereto, the innermost layer of the plate 200, is formed in which the third fine fiber layer, the second fine fiber layer, and the first fine fiber layer are laminated in the order, implementing the symmetrical structure of the plate 200.

Meanwhile, the first layer 220 may be configured to include fine fiber layers arranged in a radial configuration oriented at "30 degrees" (-150 degrees) or "60 degrees" (-120 degrees), in addition to the directions of "0 degrees," "90 degrees," "45 degrees," and "135 degrees" described above. In addition thereto, various other forms of radial structures not mentioned may be considered. Through the example embodiments, in the module frame 130, the stress acting on the first layer 220 of each plate 200 may be distributed in multiple directions to secure structural stability.

Meanwhile, when the module frame 130 is manufactured using metal as the existing technology, at least some of the surfaces facing the cell 110 (or a cell laminated body) must be coated for insulation or a coating work for the insulation must be performed directly on the outer surface of the cell 110 (or a cell laminated body). However, according to some example embodiments of the present disclosure, in the module frame 130, each outermost layer of the plate 200 may have insulating performance, and thus coating the outer surface of the module frame 130 or the coating work for the insulation on the outer surface of the cell 110 may be omitted.

Further, the second layer 240 is a layer interposed between the first layer 220 corresponding to the outermost layer of the plate 200 and the third layer 260 corresponding to the central layer of the plate 200, and the second layer 240 may correspond to a layer having superior mechanical strength properties (for example, tensile strength) or rigidity properties than the other layers.

In an example embodiment, the first layer 220 and the second layer 240 may vary depending on the difference in the number of bundles of fibers constituting each layer. The distinction between the first layer 220 and the second layer 240 may be based on the difference in target strength or stiffness. For example, the first layer 220 may have a stiffness less than or equal to the stiffness of the aluminum alloy, and the second layer 240 may have a stiffness greater than the stiffness of the aluminum alloy.

In an example embodiment, the second layer 240 may be defined as a layer in which the number of threads arranged in order for the first direction (the 0 degree direction mentioned above) corresponding to the principal stress direction of the secondary battery module 100 (for example, the direction illustrated by arrow "1" in FIG. 3) to be the longitudinal direction of the threads is greater than the number (or the number of fine fiber layers) of threads arranged in any other direction. Thus, in the second layer 240, mechanical strength for the principal stress direction of the module may be secured. For example, the number of threads (or the number of fine fiber layers) corresponding to the principal stress direction may have a ratio of about 50% or more to the total number of threads (or the total number of fine fiber layers) of the second layer 240.

For example, the second layer 240 may include at least one of glass fiber, carbon fiber, basalt fiber, and aramid fiber. For example, in an example embodiment, the second layer 240 may include at least one fine fiber layer composed of carbon fibers arranged such that the first direction (i.e., the principal stress direction of the secondary battery module 100) is the longitudinal direction of the carbon fiber threads.

However, the present disclosure is not limited to the example embodiments. For example, in another example embodiment, the second layer 240 may not include a fine fiber layer composed of carbon fiber. Instead, the second layer 240 may be configured in a way that the thread density of the fine fiber layer composed of glass fibers arranged such that the first direction is the longitudinal direction of the threads is greater than the thread density of the fine fiber layer of another layer (for example, the fine fiber layer composed of glass fibers of the first layer 220). In this case, the second layer 240 may be formed with a certain level of rigidity without using expensive carbon fiber.

In an example embodiment, the second layer 240, like the first layer 220, may also include multiple fine fiber layers.

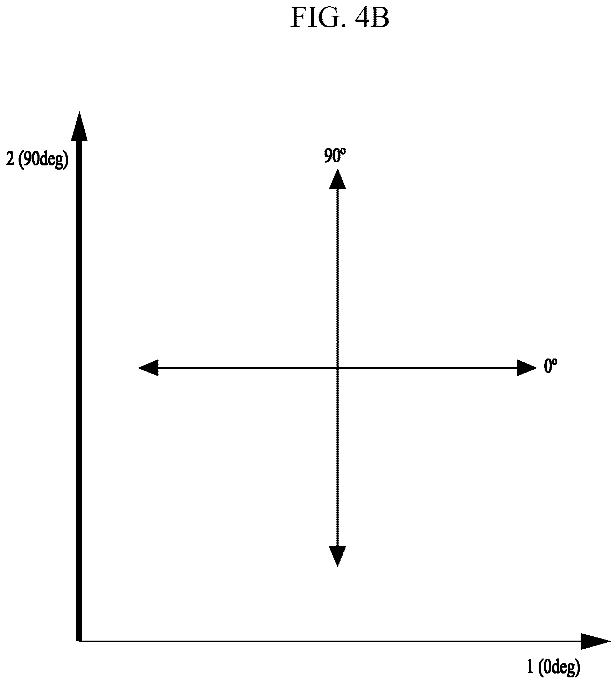

For example, the second layer 240 may include a fine fiber layer with threads arranged in the first direction (for example, the direction illustrated by arrow "1" in FIG. 3 and FIG. 4B), which is the principal stress direction of the module. Further, the second layer 240 may additionally include a fine fiber layer whose threads are arranged so as to face the secondary stress direction of the module (i.e., the second direction which is perpendicular to the first direction in the plane of the plate 200) (for example, the direction illustrated by arrow "2" in FIG. 3 and FIG. 4B). For example, when the second layer 240 includes a fine fiber layer in which the threads are arranged so as to face the secondary stress direction, the number of fine fiber layers corresponding to the secondary stress direction may be less than or equal to the number of fine fiber layers corresponding to the principal stress direction.

Meanwhile, even in the case of the second layer 240, based on the third layer 260, which is the central layer of the plate 200, each fine fiber layer may be formed such that a layer 2-1 240a positioned on the top and a layer 2-2 240b positioned on the bottom are symmetrical to each other in aspect of the materials, thicknesses and a side surface of the thread arrangement.

Further, as a layer placed in the center of the layered cross-section structure of the plate 200, the third layer 260 may be a layer with enhanced fire resistance compared to the other layers (the first layer 220 and the second layer 240). For example, the third layer 260 may be configured to include a material having a high melting point and low thermal conductivity.

For example, the third layer 260 may be configured to include at least one of a metal sheet made of basalt fiber or stainless steel.

In general, when the module frame 130 for the secondary battery is formed of a composite material including the FRP, the module frame 130 may be more vulnerable to thermal runaway of the secondary battery compared to the module frame 130 composed only of metal materials usually used according to existing technology. However, according to various example embodiments of the present disclosure, as the module frame 130 is equipped with the third layer 260 with reinforced fire resistance on the central side, the structural collapse of the module frame 130 may be effectively prevented in high temperature or high pressure environments.

Meanwhile, in an example embodiment, the third layer 260 may be formed with a thickness greater than the thickness of the first layer 220 (for example, the layer 1-1 220a or the layer 1-2 220b) or the thickness of the second layer 240 (for example, the layer 2-1 240a or the layer 2-2 240b) (for example, each of the first layers (the layer 1-1 220a and the layer 1-2 220b), or the third layer 260 may be formed with a thickness approximately twice that of the second layer (the layer 2-1 240a, the layer 2-2 240b). In contrast, in other example embodiments, each of the layers (for example, the layer 1-1 220a, the layer 2-1 240a, the third layer 260, the layer 2-2 240b and the layer 1-2 220b) may be formed to have substantially the same thickness as each other, or may be configured to include an equal number of fine layers (fine fiber layers or metal sheet layers corresponding to fine fiber layers). For example, each layer may be configured to contain four fine layers (or, each, five fine layers). In another example embodiment, only the second layer 240 (i.e., the layer 2-1 240a and the layer 2-2 240b) and the third layer 260 may be configured to be the same thickness and include fine layers of the same number, respectively, and the first layer 220 related to electrical insulation properties (i.e., the layer 1-1 220a and the layer 1-2 220b) may be configured to be a smaller thickness than the second layer 240 or the third layer 260 or include a smaller number of fine layers. For example, each first layer 220 (the layer 1-1 220a and the layer 1-2 220b) may have the thickness of less than 2 mm, and layers other than the first layer 220 may have the thickness of more than 2 mm.

Further, in an example embodiment, the arrangement direction of the threads constituting the fine fiber layer included in the third layer 260 may correspond to the principal stress direction of the secondary battery module 100 (for example, the first direction (the direction indicated by arrow "1") in FIG. 3), or may correspond to the secondary stress direction (for example, the second direction (the direction illustrated by arrow "2") in FIG. 3). In an example embodiment, the number of fine fiber layers arranged to correspond to the principal stress direction among the fine fiber layers included in the third layer 260 may be equal to or less than the number of fine fiber layers arranged to be corresponding to the secondary stress direction. Meanwhile, in another example embodiment, the arrangement direction of the threads that make up the fine fiber layer included in the third layer 260 may be other than the principal stress direction or the secondary stress direction of the secondary battery module 100. For example, the fine fiber layers included in the third layer 260 may have a radial thread arrangement.

In various example embodiments, the third layer 260 may be configured to include a fiber material (the basalt fiber) or a metal sheet having excellent fire resistance as described above, but as long as the third layer 260 includes a material with excellent fire resistance as a fine layer (a fine fiber layer or a metal sheet layer corresponding to the fine fiber layer), another fine fiber layer composed of a material other than the materials mentioned above (for example, glass fiber, aramid fiber, carbon fiber, etc.) may be further included in the third layer 260. However, in this case, it may be more preferable that a fine layer formed of a fiber material having excellent refractory performance be arranged on the outermost layer of the third layer 260 (i.e., a fine layer adjacent to the second layer 240 (for example, the layer 2-1 240a and the layer 2-2 240b)).

In various example embodiments, the plate 200 may have a layered cross-sectional structure that is overall symmetrical in the thickness direction. Furthermore, in an example embodiment, each of the layers (for example, each of the first layer 220 (i.e., the layer 1-1 220a and the layer 1-2 220b), the second layer 240 (i.e., the layer 2-1 240a and the layer 2-2 240b), and the third layer 260) constituting the plate 200, and each of the third layer 260) may individually have a layered structure that is symmetrical in the thickness direction of the plate 200. As such, when each layer (for example, the first layer 220 (the layer 1-1 220a and the layer 1-2 220b), the second layer 240 (the layer 2-1 240a and the layer 2-2 240b), and the third layer 260) has a symmetrical structure that does not have a specific direction in the thickness direction, even when producing the plate 200 by pre-manufacturing each layer in a semi-finished form and then bonding them together, there is no need to consider the vertical direction of each layer, and thus it may be convenient in the manufacturing process. Further, as isotropic properties are secured for each layer, structural stability may be further improved, and even if the drawing process or press process described later is applied to the plate 200, structural stability may be maintained.

Meanwhile, even though in another example embodiment, the plate 200 has a structure in which the arrangement direction of each thread is completely symmetrical without any specific directionality in the thickness direction, while each layer constituting the plate 200 (for example, the first layer 220 (the layer 1-1 220a and the layer 1-2 220b), the second layer 240 (the layer 2-1 240a and the layer 2-2 240b), the third layer 260) having a structure in which the fine layers constituting each layer are completely symmetrical in the material and thickness side surfaces in the thickness direction, each layer constituting the plate 200 may be configured such that the two fine layers have a direction that is symmetrical with respect to the principal stress direction in terms of the arrangement of threads. For example, when the thread arrangement direction of the innermost fine layer within a single layer has an angle difference of A° from the principal stress direction, the thread arrangement direction of the fine layer arranged at the outermost side may have an angular difference of 180 - A° from the principal stress direction.

Meanwhile, the module frame 130 according to various example embodiments of the present disclosure may be manufactured by the RTM method, or may be manufactured by at least one of the heterogeneous injection molding method, pressing method and drawing method.

For example, when the module frame 130 is manufactured through the drawing method, the module frame 130 may be manufactured by bending a single plate 200 based on a composite material including the FRP according to various example embodiments of the present disclosure into a T-shape (or U-shape) and then joining it to another plate.

Further, in another example embodiment, when the side surface of the module frame 130 includes at least one flange 131 (see FIG. 1B), when the module frame 130 is manufactured using the RTM method, the flange 131 may be formed integrally with the main body of the module frame 130, but when the module frame 130 is manufactured using a drawing method, the flange 131 part made of the material of the plate 200 of the above module frame 130 may be formed by bonding the flange 131 part to the side surface of the main body of the module frame 130 using an adhesive or the like. In this case, the flange 131 may have the same structure as the plate 200 constituting upper surface or lower surface of the module frame 130, in terms of the material and arrangement direction of the threads. Meanwhile, in an example embodiment, even when manufactured using the drawing method, the body of the flange 131 and the module frame 130 may be formed integrally.

FIG. 3 is a schematic perspective view illustrating the principal stress direction and the secondary stress direction of the secondary battery module 100 in the module frame 130 according to various example embodiments of the present disclosure.

As described above, in FIG. 3, the first direction (the direction indicated by the arrow "1") may be the principal stress direction of the secondary battery module 100, the second direction (the direction indicated by the arrow "2") may be the secondary stress direction of the secondary battery module 100, and the third direction (the direction indicated by the arrow "3") may be a direction perpendicular to the first direction and the second direction (for example, the thickness direction of each plate 200 constituting the module frame 130).

For example, the first direction may correspond to a direction parallel to the circumferential direction of the square tubular or U-shaped body of the module frame 130, and the second direction may correspond to a direction (for example, a direction parallel to the direction in which the electrode tabs of the cell 110 are directed) from the first open end part (for example, front side) of the module frame 130 to the second open end part (for example, back side).

However, the orientation setting may be applied differently considering the direction in which the battery cell 110 is arranged within the module frame 130 in the secondary battery module 100. Accordingly, in another example embodiment, the second direction (the direction indicated by the arrow "2") in FIG. 3 may be the principal stress direction of the secondary battery module 100.

FIG. 4A is a drawing exemplarily illustrating the radial thread arrangement direction of each fine fiber layer constituting the first layer 220. FIG. 4B is a drawing exemplarily showing the arrangement direction (for example, principal stress direction (a first direction) or secondary stress direction (a second direction)) of threads of each fine fiber layer constituting the second layer 240 (or the third layer 260).

For convenience of explanation, as described above with reference to FIG. 2, the axis corresponding to "0 degree" in FIG. 4A and FIG. 4B is the first direction, which is the principal stress direction of the secondary battery module 100, and the axis corresponding to "90 degrees" is the second direction, which is the secondary stress direction of the secondary battery module 100.

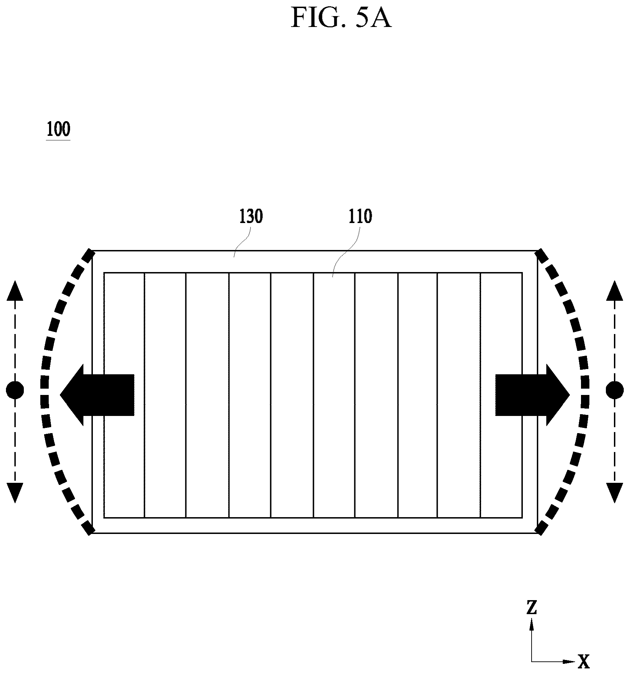

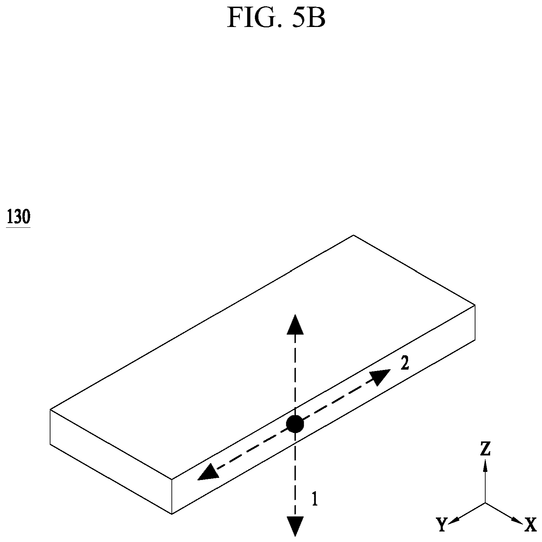

FIG. 5A and FIG. 5B are schematic cross-sectional and perspective views of the module frame 130 for explaining the principal stress direction and secondary stress direction of the module frame 130 according to the swelling phenomenon of the battery cell 110 in various example embodiments of the present disclosure.

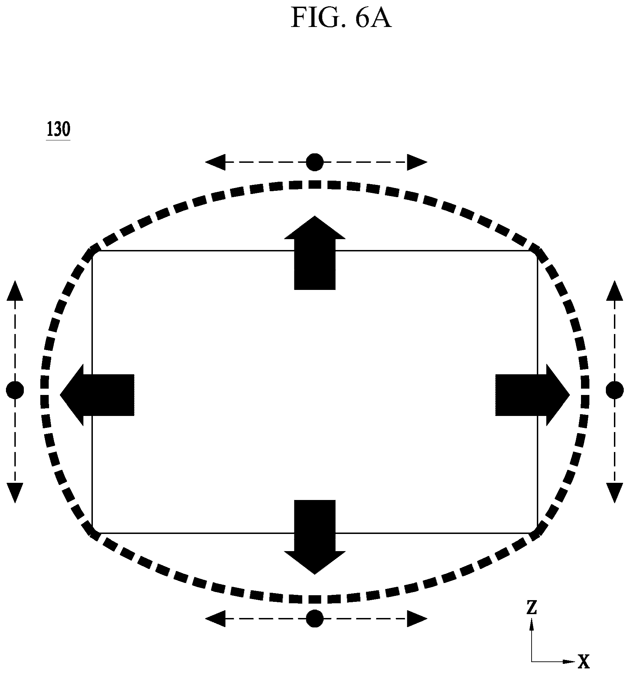

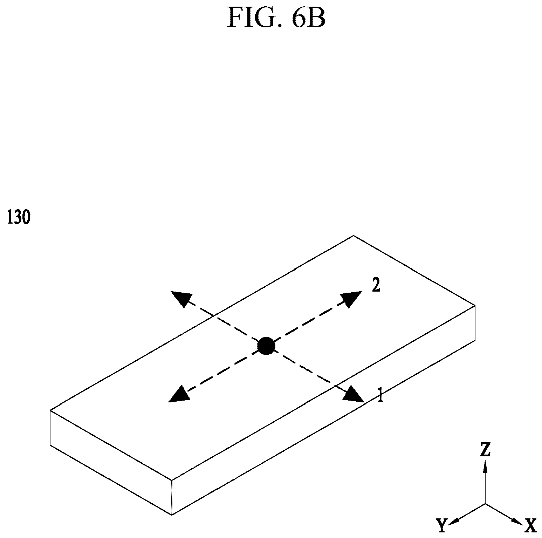

FIG. 6A and FIG. 6B are schematic cross-sectional and perspective views of the module frame 130 for explaining the principal stress direction and the secondary stress direction of the module frame 130 according to the increase in internal pressure of the secondary battery module 100 in various example embodiments of the present disclosure.

Referring to FIG. 5A and FIG. 5B, the battery cells 110 (or battery cell laminated bodies) housed inside the module frame 130 in the secondary battery module 100 may be arranged in a row along one direction (for example, the x-axis direction, see FIG. 1, etc.). Meanwhile, when swelling occurs in the battery cells 110 (or battery cell laminated bodies), the cell volume increases in the direction in which the battery cells 110 are stacked, so that both side surfaces of the module frame 130 (for example, the closed surfaces of both side surfaces of the module frame 130) may be pressed. Therefore, it may be necessary to absorb the resulting pressure in the module frame 130 for support.

For example, when swelling occurs in the battery cell 110 (or the battery cell laminated body), inflation pressure may occur in a direction perpendicular to the main body (the part where the electrode assembly is accommodated) of the battery cell 110 (e.g., the x-axis direction in FIG. 5A), and accordingly, on the side surface of the module frame 130, stress may occur in a direction that resists this inflation pressure.

Specifically, referring to FIG. 5A, the inflation pressure of the battery cell 110 (or, the battery cell laminated body) may be greatest at each central region based on the height direction (e.g., z-axis direction) of the side surface of the module frame 130. Accordingly, on the side surface of the module frame 130, a relatively large tensile force may be generated in the direction perpendicular to the stacking direction (x-axis direction) of the battery cells 110 and the longitudinal direction (y-axis direction) of the battery cells 110, as illustrated in FIG. 5A and FIG. 5B. In other words, due to the swelling phenomenon of the battery cell 110 (or the battery cell laminated body), on the side surface of the module frame 130 (the closed end part of the side surface of the module frame 130), stress in the z-axis direction may be relatively large among stresses in various directions.

Therefore, in the module frame 130 according to various example embodiments of the present disclosure, by setting the z-axis direction (first direction) perpendicular to the y-axis as the principal stress direction based on the side surface plane of the module frame 130, the swelling phenomenon may be effectively compensated for.

Further, when pouch-type battery cells 110 are stacked in the x-axis direction, since each battery cell 110 has a long shape in the y-axis direction, the module frame 130 may also receive a large force in the direction parallel to the y-axis on the side surface (for example, the end part parallel to the y-z plane).

Specifically, since the change in cell volume due to swelling may be large at the center of the battery cell 110 based on the y-axis in the case of the pouch cell with a large aspect ratio, structural deformation of swelling phenomenon in the module frame 130 according to various example embodiments of the present disclosure may be minimized by setting the y-axis direction (the second direction) perpendicular to the principal stress direction as the secondary stress direction, and by using composite material including the FRP with radial thread arrangement structure applied to the module frame 130.

Meanwhile, referring to FIG. 6A and FIG. 6B, as the internal pressure of the secondary battery module 100 increases, a swelling phenomenon may occur in the module frame 130. Accordingly, on the surface of each plate 200 of the module frame 130, internal pressure may be applied in the direction from the inside to the outside of the secondary battery module 100 (in the direction of the solid arrow in FIG. 6A).

According to various example embodiments of the present disclosure, based on the direction of the pressure action of the secondary battery module 100, the direction of swelling action explained with reference to FIG. 5A and FIG. 5B and the manufacturing method of the module frame 130 including the drawing method together, the principal stress direction and secondary stress direction may be determined and the thread arrangement direction may be determined.

For example, in an example embodiment of the present disclosure, by setting the first direction (for example, the direction illustrated by arrow "1" in FIG. 3) parallel to the circumferential direction of the square tubular or U-shaped body of the module frame 130 as the principal stress direction, by setting the longitudinal direction of the body from the first open end part of the module frame 130 toward the second open end part (for example, the direction illustrated by arrow "2" in FIG. 3) as the secondary stress direction, and by determining the thread arrangement direction of each fiber layer constituting the plate 200 in response thereto, provided may be the module frame 130 by which rigidity is maximized with the consideration on the application and the manufacturing method of the module frame 130 for the secondary battery. Alternatively, in another example embodiment, it is also possible to determine the thread arrangement direction of each fiber layer by setting another specific direction (for example, the longitudinal direction of the body) as the principal stress direction based on the arrangement direction of the battery cell 110, and by setting another specific direction (for example, the first direction parallel to the circumferential direction of the module frame 130 body) as the secondary stress direction based on the principal stress direction.

Further, when forming the module frame 130 with a composite material including the FRP as in various example embodiments of the present disclosure, the module frame 130 may have a tensile strength equal to or greater than that of a module frame formed using general metal materials, while the composite material may have a lower Young's modulus than the metal. Thus, the module frame 130 may be configured to have high rigidity to cope with the swelling of the battery cells 110 while also having elastic properties that may effectively absorb the swelling. Further, since it is lighter than metal, secondary batteries may be made lighter and their energy density may be increased.

Further, in order to meet the needs of various types of secondary batteries, the strength, elasticity, and fire resistance properties of each material may be adjusted differently. Thus, compared to the metal module frame 130 based on existing technology, according to the example embodiments of the present disclosure, there is a high degree of design freedom.

In the above, various embodiments of the present disclosure are described in detail. However, it will be apparent to those with average knowledge in the technical field that scope of rights of this disclosure is not limited thereto, and various modifications and variations are possible without departing from the technical spirit of the present disclosure as set forth in the claims. Further, the above-described example embodiment may be implemented with some elements deleted, and each example embodiment may be implemented in combination with each other.

## Claims

1. A module housing for secondary battery, for accommodating a battery
cell laminated body comprising a plurality of battery cells laminated along a first direction,
wherein the module housing for the secondary battery is formed by a plate based on a composite material comprising fiber reinforced plastic (FRP), wherein the plate comprises:
a plurality of first layers that are formed of a FRP material having electrical insulating properties; and
at least one second layer that is formed of a material different from the plurality of first layers, and interposed between the plurality of first layers, and
comprising a layered cross-sectional structure symmetrical in a thickness direction of the plate.

2. The module housing for the secondary battery of claim 1, wherein a
plurality of second layers are prepared,
wherein the plate is formed from a material different from the plurality of first layers and the plurality of second layers, and comprises a third layer that is interposed between the second layers.

3. The module housing for the secondary battery of claim 2, wherein each
of the plurality of first layers, each of the plurality of second layers and the third layer comprises
a plurality of fine layers, of which number is identical for each of the plurality of first layers, each of the plurality of second layers and the third layer.

4. The module housing for the secondary battery of claim 2, wherein each
of the plurality of first layers, each of the plurality of second layers and the third layer comprises
a plurality of fine layers, each comprising a layered cross-sectional structure symmetrical in the thickness direction.

5. The module housing for the secondary battery of claim 1, wherein each of the plurality of first layers comprises a plurality of fine fiber layers, and comprises a radial structure in which an arrangement direction of threads constituting any one of the plurality of fine fiber layers corresponds to an arrangement direction of threads constituting remaining fine fiber layers.

6. The module housing for the secondary battery of claim 1, wherein the at least one second layer comprises:
at least one first fine fiber layer constituted of threads that are arranged in order for a direction corresponding to a principal stress direction of the plate to be a longitudinal direction of the threads; and
at least one second fine fiber layer constituted of threads that are arranged in order for a direction corresponding to a direction other than the principal stress direction to be the longitudinal direction of the threads,
wherein a number of the at least one first fine fiber layer of the at least one second layer is greater than a number of the at least one second fine fiber layer.

7. The module housing for the secondary battery of claim 6, wherein the at least one second fine fiber layer of the at least one second layer is constituted of threads that are arranged in order for a direction corresponding to a secondary stress direction of the plate to be the longitudinal direction of the threads.

8. The module housing for the secondary battery of claim 7, wherein the principal stress direction and the secondary stress direction are perpendicular to each other.

9. The module housing for the secondary battery of claim 6, wherein the at
least one first fine fiber layer of the at least one second layer comprises carbon fiber, or
comprises glass fiber constituted of a greater density than threads constituting the at least one second fiber layer of the at least one second layer.

10. The module housing for the secondary battery of claim 2, wherein the third layer comprises at least one between a fine layer constituted of basalt fibers and a fine layer constituted of a metal sheet made of stainless steel.

11. The module housing for the secondary battery of claim 2, wherein each of the plurality of second layers and the third layer have substantially an identical thickness.

12. The module housing for the secondary battery of claim 2, wherein the third layer comprises:
at least one first fine layer formed by threads that are arranged in order for a direction corresponding to the principal stress direction of the plate to be the longitudinal direction of the threads; and
at least one second fine layer formed by threads that are arranged in order for the direction corresponding to the secondary stress direction of the plate to be the longitudinal direction of the threads,
wherein a number of the at least one first fine layer of the third layer is less than a number of the at least one second fine layer of the third layer.

13. The module housing for the secondary battery of claim 1, further
comprising a mounting flange that is located on a closed end part of a side surface,
wherein the mounting flange is formed with a material identical to the material of the plate.

14. The module housing for the secondary battery of claim 1, manufactured by a resin transfer molding (RTM) method, a heterogeneous injection molding method, a pressing method, or a drawing method.

15. The module housing for the secondary battery of claim 1, wherein each of the plurality of first layers comprises a thickness of less than 2 mm.

16. A module housing for secondary battery, for accommodating a battery cell laminated body comprising a plurality of battery cells laminated along a first direction,
wherein the module housing for the secondary battery is formed by a plate based on a composite material comprising fiber reinforced plastic, wherein the plate comprises:
a third layer placed at a center based on a cross-section of the plate in a thickness direction;
a plurality of first layers arranged on an outer surface based on the cross-section of the plate in the thickness direction; and
a plurality of second layers that are placed on both sides with the third layer in between, and interposed between the plurality of first layers,
wherein the plurality of first layers are formed of a FRP material with electrical insulating properties,
wherein the plurality of second layers have greater mechanical strength than the plurality of first layers, and
wherein the third layer comprises at least one of basalt fiber and a metal sheet.
